# EUROPEAN PATENT APPLICATION

(11) **EP 4 837 662 A1**
(43) Date of publication of application: **11.11.2026**
(21) Application number: 24925454.1
(22) Date of filing: 16.08.2024
(51) Int. Cl.: B05C 11/10

(54) **COATING METHOD AND SYSTEM, COMPUTER DEVICE, AND STORAGE MEDIUM**

(30) Priority: 23.02.2024 CN 202410202019
(71) Applicant: Contemporary Amperex Technology Co., Limited, Ningde, Fujian 352100 (CN)
(72) Inventor: LIU, Ban, Ningde, Fujian 352100 (CN); LIU, Weichao, Ningde, Fujian 352100 (CN); QIN, Anxiang, Ningde, Fujian 352100 (CN); LIN, Hong, Ningde, Fujian 352100 (CN); CHEN, Weijian, Ningde, Fujian 352100 (CN); ZHEN, Zhihui, Ningde, Fujian 352100 (CN)
(74) Representative: Ziebig Hengelhaupt Intellectual Property Attorneys Patentanwaltskanzlei PartGmbB
(86) International application number: PCT/CN2024/112700
(87) International publication number: WO 2025/175712

(57) **Abstract**

A coating method and system, a computer device, and a storage medium, relating to the technical field of battery production, at least solving the problem in the related art of insufficient accuracy in a non-thinned region resulting from employing an extreme value deviation algorithm for edge finding in the non-thinned region. The method comprises: acquiring coating weight data corresponding to an electrode sheet (S11), wherein the electrode sheet comprises a coating region and a blank region, and the coating region is coated with an active material layer; determining the coating region from the electrode sheet on the basis of the coating weight data and reference weight corresponding to the electrode sheet (S12), wherein the coating region comprises a thinned region and a non-thinned region, and the coating thickness of the thinned region is less than that of the non-thinned region; and determining the non-thinned region from the coating region on the basis of attribute information of the electrode sheet (S13).

## Description

### CROSS-REFERENCE TO RELATED APPLICATIONS

This disclosure claims priority to Chinese Patent Application No. 202410202019.8, filed on February 23, 2024, and entitled "COATING METHOD AND SYSTEM, COMPUTER DEVICE, AND STORAGE MEDIUM", which is incorporated herein by reference in its entirety.

### TECHNICAL FIELD

This disclosure relates to, but is not limited to, the technical field of battery production, and in particular, to a coating method and system, a computer device, and a storage medium.

### BACKGROUND

In a related art, edges of non-thinned regions are mostly determined from coating weight data by using an extreme value offset algorithm. However, because thinned regions in coating regions are not smooth, the algorithm cannot be used to accurately process data of the thinned regions, resulting in low accuracy of the non-thinned regions.

### SUMMARY

Embodiments of this disclosure provide a coating method and system, a computer device, and a storage medium, which resolves at least one problem in the related art that accuracy of a non-thinned region is low when an extreme value offset algorithm is used to perform edge tracing on the non-thinned region. In this disclosure, an effective non-thinned region is determined by using coating weight data corresponding to an electrode sheet, reference weight corresponding to the electrode sheet, and attribute information of the electrode sheet, thereby improving the accuracy of the non-thinned region.

Technical solutions of the embodiments of this disclosure are implemented as follows:
An embodiment of this disclosure provides a coating method, where the method includes:
acquiring coating weight data corresponding to an electrode sheet, where the electrode sheet includes a coating region and a blank region, and the coating region is coated with an active material coating;
determining the coating region from the electrode sheet based on the coating weight data and reference weight corresponding to the electrode sheet, where the coating region includes a thinned region and a non-thinned region, and a coating thickness of the thinned region is less than a coating thickness of the non-thinned region; and
determining the non-thinned region from the coating region based on attribute information of the electrode sheet.

In some implementations, the determining the coating region from the electrode sheet based on the coating weight data and reference weight corresponding to the electrode sheet includes: determining the reference weight corresponding to the electrode sheet based on substrate weight and coating weight that correspond to the electrode sheet; updating the coating weight data based on the reference weight corresponding to the electrode sheet to obtain updated coating weight data; and determining the coating region from the electrode sheet based on the updated coating weight data.

In this implementation of this disclosure, on the one hand, the reference weight is determined through the substrate weight and the coating weight corresponding to the electrode sheet, which improves determination accuracy of the reference weight; on the other hand, edge tracing of the coating region is performed in the coating weight data through the reference weight, which improves determination accuracy of the coating region and further helps determine the non-thinned region.

In some implementations, the determining the reference weight corresponding to the electrode sheet based on substrate weight and coating weight that correspond to the electrode sheet includes: determining a sum of the substrate weight and the coating weight, where the coating weight includes one of the following: weight of a single-sided coating and weight of double-sided coatings; and determining, based on the sum, the reference weight corresponding to the electrode sheet.

In this implementation of this disclosure, the reference weight is determined in real time through the sum between the substrate weight and the weight of single-sided/double-sided coatings, which improves accuracy of the reference weight compared with constant reference weight.

In some implementations, the coating weight data includes weight corresponding to at least one detection position in the electrode sheet, and the updated coating weight data includes target weight corresponding to each detection position; and the updating the coating weight data based on the reference weight corresponding to the electrode sheet to obtain updated coating weight data includes: for weight corresponding to each detection position in the electrode sheet, determining, based on the weight corresponding to the detection position and the reference weight corresponding to the electrode sheet, target weight corresponding to the detection position.

In this implementation of this disclosure, the target weight corresponding to each detection position is determined based on the reference weight and the weight corresponding to each detection position, which improves the accuracy of the target weight corresponding to the detection position, thereby improving the edge tracing accuracy of the coating region.

In some implementations, the determining, based on the weight corresponding to the detection position and the reference weight corresponding to the electrode sheet, target weight corresponding to the detection position includes at least one of the following: when the weight corresponding to the detection position is less than the reference weight corresponding to the electrode sheet, using preset weight as the target weight corresponding to the detection position; or when the weight corresponding to the detection position is not less than the reference weight corresponding to the electrode sheet, using the weight corresponding to the detection position as the target weight corresponding to the detection position.

In this implementation of this disclosure, the reference weight is compared with the weight corresponding to the detection position to use the preset weight or the weight corresponding to the detection position as the target weight, which improves the accuracy of the target weight, thereby improving accuracy of edge tracing of the coating region.

In some implementations, the attribute information of the electrode sheet includes at least one of the following: attribute information of a thinned region and attribute information of a light spot region; and the determining the non-thinned region from the coating region based on attribute information of the electrode sheet includes: when the attribute information of the electrode sheet includes the attribute information of the thinned region and the attribute information of the light spot region, using, as the non-thinned region, a region formed after boundary lines on two sides of the coating region are respectively translated toward a center by a first length, where the first length includes a width of the thinned region and a radius of the light spot region; when the attribute information of the electrode sheet includes the attribute information of the thinned region, using, as the non-thinned region, a region formed after boundary lines on two sides of the coating region are respectively translated toward a center by a second length, where the second length includes a width of the thinned region; or when the attribute information of the electrode sheet includes the attribute information of the light spot region, using, as the non-thinned region, a region formed after boundary lines on two sides of the coating region are respectively translated toward a center by a third length, where the third length includes a radius of the light spot region.

In this implementation of this disclosure, the non-thinned region is determined from the coating region based on preset sizes of the thinned region and/or the light spot region, which improves the accuracy of the non-thinned region.

In some implementations, the method further includes: dividing the non-thinned region into at least one coating sub-region; and for each coating sub-region, determining, based on coating weight data corresponding to the coating sub-region, partition information corresponding to the coating sub-region.

In this implementation of this disclosure, on the one hand, the non-thinned region is divided into multiple coating sub-regions, so that coating weight data of each sub-region matches an actual size and position of the partition, which can truly reflect the contained coating weight data with respect to each actual partition; on the other hand, partition information corresponding to each sub-region is determined based on the coating weight data corresponding to each coating sub-region, which improves the accuracy of the partition information.

In some implementations, the method further includes: for each coating sub-region in the non-thinned region, determining coating quality of the coating sub-region based on coating weight data and partition information that correspond to the coating sub-region.

In this implementation of this disclosure, the coating quality of each coating sub-region is determined separately based on the coating weight data and the partition information corresponding to each coating sub-region, which improves the accuracy of the coating quality of each sub-region. This can not only rapidly and effectively determine whether there is the sub-region with abnormal quality, to improve the production efficiency of the coating, but also reduce the possibility of outflow of the electrode sheet with the abnormal coating. Therefore, in the subsequent production process of the electrode sheet, the coating quality on the surface of the electrode sheet is ensured, which further ensures a capacity, service life, and safety of the battery.

In some implementations, the coating weight data corresponding to the coating sub-region includes weight corresponding to at least one detection position, and the partition information of the coating sub-region includes mean weight; and the determining coating quality of the coating sub-region based on coating weight data and partition information that correspond to the coating sub-region includes: determining, based on weight corresponding to each detection position and the mean weight, first weight corresponding to the coating sub-region; determining, based on a weight threshold, the mean weight, and the first weight, second weight corresponding to the coating sub-region, where the weight threshold is determined based on the weight corresponding to each detection position; and determining the coating quality of the coating sub-region based on the first weight, the mean weight, and the second weight.

In this implementation of this disclosure, the coating quality of the sub-region is determined based on the weight corresponding to each detection position, the mean weight of the sub-region, and the weight threshold of the sub-region, which improves the accuracy of the coating quality of the sub-region.

In some implementations, the determining, based on weight corresponding to each detection position and the mean weight, first weight corresponding to the coating sub-region includes: respectively determining a first difference between the weight corresponding to each detection position and the mean weight; and determining, based on each first difference and total weight corresponding to the coating sub-region, the first weight corresponding to the coating sub-region, where the total weight represents a sum of weight included in the coating weight data corresponding to the coating sub-region.

In the implementations of this disclosure, the first weight is determined based on the difference between the weight corresponding to each detection position and the mean weight and the total weight corresponding to the sub-region, which improves the accuracy of the first weight, thereby improving the accuracy of the coating quality of the sub-region.

In some implementations, the weight threshold includes maximum weight and minimum weight; and the determining, based on a weight threshold, the mean weight, and the first weight, second weight corresponding to the coating sub-region includes: determining a second difference between the mean weight and the minimum weight; determining a third difference between the maximum weight and the mean weight; and determining the second weight corresponding to the coating sub-region based on the second difference, the third difference, and the first weight.

In this implementation of this disclosure, the second weight is determined based on the maximum weight, the minimum weight, the mean weight, and the first weight, which improves the accuracy of the second weight, thereby improving the accuracy of the coating quality of the sub-region.

In some implementations, the determining the coating quality of the coating sub-region based on the first weight, the mean weight, and the second weight includes: determining an offset value between third weight and a corresponding threshold, where the third weight includes the first weight, the mean weight, and the second weight; and when the offset value satisfies a preset condition, determining the coating quality of the coating sub-region is normal; or when the offset value does not satisfy a preset condition, determining that the coating quality of the coating sub-region is abnormal.

In this implementation of this disclosure, based on different weight of each sub-region and the corresponding threshold, it is determined whether the coating quality of the sub-region is abnormal. This can not only rapidly and effectively position a sub-region with abnormal quality, to improve production efficiency of coating, but also reduce a possibility of outflow of the electrode sheet with the abnormal coating.

In some implementations, the method further includes: displaying a first interface, where the first interface includes a display region; and in response to received partition information corresponding to each coating sub-region in the non-thinned region of the electrode sheet, displaying, in the display region, the partition information corresponding to each coating sub-region in the non-thinned region of the electrode sheet.

In this implementation of this disclosure, the partition information corresponding to each coating sub-region is displayed in real time in the first interface, which reflects a coating status of each sub-region more intuitively, thereby rapidly and effectively determining whether there is a sub-region with abnormal coating quality.

In some implementations, the display region includes a first display sub-region and a second display sub-region; and the displaying, in the display region, the partition information corresponding to each coating sub-region in the non-thinned region of the electrode sheet includes: displaying, in the first display sub-region in a first display manner, the partition information corresponding to each coating sub-region in the non-thinned region of the electrode sheet; and displaying, in the second display sub-region in a second display manner, partition information corresponding to each coating sub-region in at least one historical non-thinned region of the electrode sheet.

In this implementation of this disclosure, the partition information corresponding to each sub-region in the current non-thinned region and the partition information corresponding to each sub-region in the multiple historical non-thinned regions is displayed separately in different display manners, which more intuitively reflects a coating status corresponding to each coating sub-region during each coating procedure, thereby rapidly and effectively determining whether there is a sub-region with abnormal coating quality during the current coating procedure, whether the same coating sub-region is abnormal during each coating procedure, and the like.

In some implementations, the first interface further includes a first setting control, and the method further includes: in response to a trigger operation on the first setting control, displaying a second interface, where the second interface includes an attribute setting control, the attribute setting control is configured to set the attribute information of the electrode sheet, and the attribute information of the electrode sheet includes at least one of the following: the attribute information of the thinned region and the attribute information of the light spot region.

In this implementation of this disclosure, the attribute information of the electrode sheet is set through a visualized interface, which simplifies an operation step and improves the accuracy of the attribute information of the electrode sheet.

In some implementations, the first interface further includes a second setting control, and the method further includes: in response to a trigger operation on the second setting control, displaying a third interface, where the third interface includes a substrate setting control and a coating weight setting control, the substrate setting control is configured to set substrate weight corresponding to the electrode sheet, and the coating weight setting control is configured to set coating weight corresponding to the electrode sheet.

In this implementation of this disclosure, the substrate weight and the coating weight corresponding to the electrode sheet are set through a visualized interface, which simplifies the operation step and improves the accuracy of the information.

An embodiment of this disclosure provides a coating system, including a control apparatus and an acquisition apparatus;
the acquisition apparatus is configured to acquire coating weight data corresponding to an electrode sheet, where the electrode sheet includes a coating region and a blank region, and the coating region is coated with an active material coating; and
the control apparatus is configured to: determine the coating region from the electrode sheet based on the coating weight data and reference weight corresponding to the electrode sheet, where the coating region includes a non-thinned region and a thinned region, and a coating thickness of the thinned region is less than a coating thickness of the non-thinned region; and determine the non-thinned region from the coating region based on attribute information of the electrode sheet.

In this embodiment of this disclosure, the effective non-thinned region is determined through the coating weight data corresponding to the electrode sheet acquired by the acquisition apparatus, the reference weight corresponding to the electrode sheet, and the attribute information of the electrode sheet, which improves the accuracy of the non-thinned region compared with edge tracing of the non-thinned region through the extreme value offset algorithm.

In some implementations, the coating system further includes a display apparatus; the control apparatus is further configured to: for each coating sub-region in the non-thinned region, determine partition information corresponding to the coating sub-region based on coating weight data corresponding to the coating sub-region; and the display apparatus is configured to display the partition information corresponding to each coating sub-region.

In this implementation of this disclosure, on the one hand, the partition information corresponding to each sub-region is determined based on the coating weight data corresponding to each coating sub-region, which improves the accuracy of the partition information; on the other hand, the partition information corresponding to each coating sub-region is displayed in real time, which reflects a coating state of each sub-region more intuitively, thereby rapidly and effectively determining whether there is a sub-region with abnormal coating quality.

An embodiment of this disclosure provides a computer device, including a processor and a memory, where the memory stores a computer program that can be run on the processor, and the processor implements the foregoing method when executing the computer program.

An embodiment of this disclosure provides a computer-readable storage medium, storing a computer program, where the computer program implements the foregoing method when executed by a processor.

An embodiment of this disclosure provides a computer program product, including a computer program or an instruction, where the computer program or the instruction implements the foregoing method when executed by a processor.

In the embodiments of this disclosure, the coating weight data corresponding to the electrode sheet is acquired, where the electrode sheet includes the coating region and the blank region, and the coating region is coated with the active material coating; the coating region is determined from the electrode sheet based on the coating weight data and the reference weight corresponding to the electrode sheet; the coating region includes the non-thinned region and the thinned region, and the coating thickness of the thinned region is less than the coating thickness of the non-thinned region; and the non-thinned region is determined from the coating region based on the attribute information of the electrode sheet. In this way, an effective non-thinned region is determined through the coating weight data corresponding to the electrode sheet, the reference weight corresponding to the electrode sheet, and the attribute information of the electrode sheet. Compared with edge tracing of the non-thinned region through the extreme value offset algorithm, the accuracy of the non-thinned region is improved.

It should be understood that the foregoing general descriptions and the following detailed descriptions are merely exemplary and explanatory and are not intended to limit this disclosure.

### BRIEF DESCRIPTION OF DRAWINGS

The accompanying drawings herein are incorporated into this specification and form a part of this specification, and these accompanying drawings illustrate the embodiments conforming to this disclosure, and are intended to describe the technical solutions in this disclosure together with this specification.
FIG. 1 is a first schematic diagram of an implementation flow of a coating method according to an embodiment of this disclosure;
FIG. 2 is a first schematic diagram of a first interface according to an embodiment of this disclosure;
FIG. 3 is a second schematic diagram of a first interface according to an embodiment of this disclosure;
FIG. 4 is a schematic diagram of a second interface according to an embodiment of this disclosure;
FIG. 5 is a schematic diagram of a third interface according to an embodiment of this disclosure;
FIG. 6 is a second schematic diagram of an implementation flow of a coating method according to an embodiment of this disclosure;
FIG. 7 is a third schematic diagram of an implementation flow of a coating method according to an embodiment of this disclosure;
FIG. 8 is a fourth schematic diagram of an implementation flow of a coating method according to an embodiment of this disclosure;
FIG. 9 is a schematic structural diagram of composition of a coating system according to an embodiment of this disclosure; and
FIG. 10 is a schematic diagram of a hardware entity of a computer device according to an embodiment of this disclosure.

### DESCRIPTION OF EMBODIMENTS

To make purposes, technical solutions, and advantages of this disclosure clearer, this disclosure is further described in detail with reference to accompanying drawings. The described embodiments should not be construed as a limitation on this disclosure, and all other embodiments obtained by persons of ordinary skills in the art without creative efforts shall fall within the protection scope of this disclosure.

In the following description, "some embodiments" describe a subset of all possible embodiments, but it can be understood that "some embodiments" may be the same subset or different subsets of all possible embodiments, and may be combined with each other in absence of conflicts.

In the following description, the terms "first/second/third" are only used to differentiate similar objects, and do not represent a specific sequence of the objects. It can be understood that a specific sequence of "first/second/third" can be changed if permitted, so that the embodiments of this disclosure described herein can be implemented in other sequences than those illustrated or described herein.

Unless otherwise defined, all technical and scientific terms used herein have the same meanings as commonly understood by persons skilled in the technical field to which this disclosure belongs. The terms used herein are only for the purpose of describing the embodiments of this disclosure and are not intended to limit this disclosure.

In the related art, new energy batteries in life and industry are increasingly extensively applied. The new energy batteries are not only used in energy storage power supply systems such as hydropower, thermal power, wind power, and solar power stations, but are also widely used in electric transportation tools such as electric bicycles, electric motorcycles, and electric vehicles, as well as numerous fields such as aerospace. With the continuous expansion of application fields of power batteries, the market demand therefor keeps growing. The battery may be a battery cell. The battery cell refers to a basic unit that can realize mutual conversion between chemical energy and electric energy, and can be used to produce a battery module or a battery pack, thereby supplying power to an electric apparatus. The battery cell may be a secondary battery. The secondary battery refers to a battery cell that can be reused by charging to activate active materials after being discharged. The battery cell can be a lithium-ion battery, a sodium-ion battery, a sodium-lithium ion battery, a lithium metal battery, a sodium metal battery, a lithium-sulfur battery, a magnesium-ion battery, a nickel-metal hydride battery, a nickel-cadmium battery, a lead-acid battery, or the like. The battery may also be a single physical module including one or more battery cells to provide a higher voltage and capacity. When there are multiple battery cells, the multiple battery cells are connected in series, parallel, or a combination of series and parallel through busbars.

The battery cell includes an electrode assembly and an electrolyte. The electrode assembly includes a positive electrode sheet, a negative electrode sheet, and a separator. The battery cell mainly works by relying on metal ions moving between the positive electrode sheet and the negative electrode sheet. The positive electrode sheet includes a positive electrode current collector (also referred to as a positive electrode substrate) and a positive electrode active material layer. The positive electrode active material layer is applied on a surface of the positive electrode current collector. Taking the lithium-ion battery as an example, a material of the positive electrode current collector may be aluminum, and the positive electrode active material layer includes a positive electrode active material. The positive electrode active material may be lithium cobalt oxide, lithium iron phosphate, ternary lithium, lithium manganate, or the like. The negative electrode sheet includes a negative electrode current collector (also referred to as a negative electrode substrate) and a negative electrode active material layer. The negative electrode active material layer is applied on a surface of the negative electrode current collector. A material of the negative electrode current collector may be copper, and the negative electrode active material layer includes a negative electrode active material. The negative electrode active material may be carbon, silicon, or the like.

The positive and negative electrode sheets are main components of the battery cell and determine electrochemical performance and safety of the battery. The positive and negative electrode sheets are formed by slitting a coated substrate. Coating refers to a process of uniformly, continuously, or intermittently applying a prepared battery slurry onto the substrate (or the current collector). The battery slurry is made of materials such as a binder, an active material, and a conductive agent. The substrate may be any suitable substrate such as aluminum foil or copper foil. The electrode sheet includes a coating region and a blank region. The blank region refers to a region requiring no coating, that is, a region coated with no active material layer on the surface of the current collector. The blank region is disposed to reserve operating space for a subsequent processing procedure (for example, tab cutting). The coating region refers to a region that requires coating, that is, a region for applying an active material layer on at least one surface (including a front side, a back side, or the like) of the substrate. The coating region includes a thinned region and a non-thinned region. The thinned region is located at an edge of the coating region, and a coating thickness of the thinned region is less than a coating thickness of the non-thinned region.

Coating quality of an electrode sheet is closely related to a capacity, life, safety, or the like of the battery. The coating quality of the electrode sheet mainly refers to coating quality of the non-thinned region. At present, edge tracing is basically performed on acquired coating weight data by an extreme value offset algorithm to obtain the edge of the non-thinned region, while the edge of the thinned region cannot be obtained. Because the weight data of the thinned region is unsmooth, the data of the thinned region cannot be accurately processed via the algorithm, resulting in low accuracy of the determined non-thinned region. In addition, because the accuracy of the non-thinned region is not high, a different non-thinned region may be determined via coating weight data obtained each time, and in this way, different weight data is also contained with respect to each partition corresponding to each non-thinned region, and contained weight data with respect to an actual partition cannot be truly reflected.

An embodiment of this disclosure provides a coating method, to determine an effective non-thinned region through coating weight data corresponding to the electrode sheet, reference weight corresponding to the electrode sheet, and attribute information of the electrode sheet. Compared with the extreme value offset algorithm used to perform edge tracing on the non-thinned region, the accuracy of the non-thinned region is improved. The method provided in this embodiment of this disclosure may be performed by a computer device. The computer device may be various types of terminals such as a notebook computer, a tablet computer, a desktop computer, or a coating device. In some implementations, the coating device further has a control apparatus, and the control apparatus may be at least one of Programmable Logic Controller (Programmable Logic Controller, PLC), a single-chip microcomputer, a middle computer, and an upper computer.

The following clearly and completely describes the technical solutions in embodiments of this disclosure with reference to the drawings in the embodiments of this disclosure.

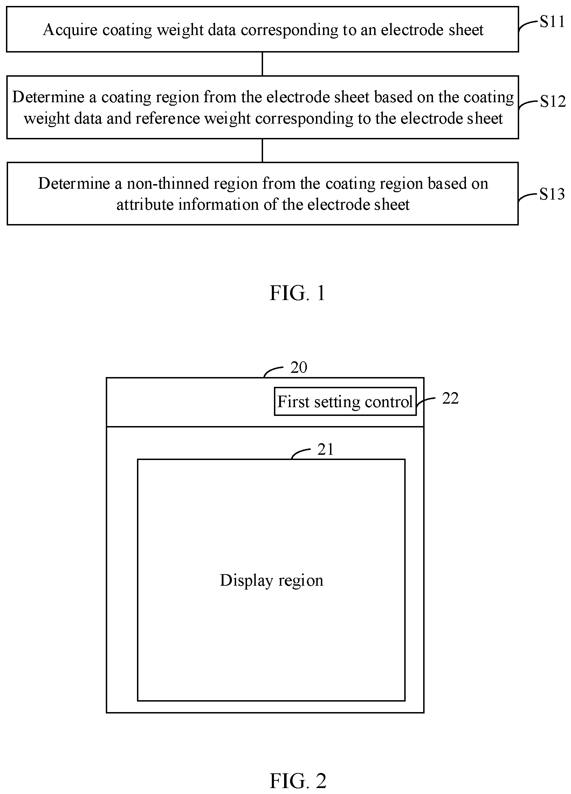

FIG. 1 is a first schematic diagram of an implementation flow of a coating method according to an embodiment of this disclosure. As shown in FIG. 1, the method includes steps S11 to S13:

Step S11: Acquire coating weight data corresponding to an electrode sheet.

Herein, the electrode sheet includes a coating region and a blank region, and the coating region is coated with an active material coating. The coating weight data includes coating weight corresponding to each detection position in the electrode sheet. During implementation, coating is performed along a length direction of the electrode sheet, and the length direction is perpendicular to a width direction. After the current coating of the electrode sheet is completed, obvious weight jumps appear at both side edges in the width direction of the coating region, while a region without the weight jumps is the blank region, and the region with the weight jumps is the coating region. The coating region includes a non-thinned region and a thinned region. During the coating process, to avoid problems such as thick edges and bulged edges of the electrode sheet, it is necessary to perform thinning treatment on a coating at an edge region of the electrode sheet to form the thinned region.

A method of acquiring the coating weight data may be any suitable method using, for example, a preset acquisition apparatus such as a thickness gauge, a weight detector, or an areal density meter. The coating weight data may refer to density, weight, a thickness, or the like of the coating.

Step S12: Determine a coating region from the electrode sheet based on the coating weight data and reference weight corresponding to the electrode sheet.

Herein, the coating region includes a thinned region and a non-thinned region, and a coating thickness of the thinned region is less than a coating thickness of the non-thinned region. Different electrode sheets may correspond to the same or different reference weight. In some implementations, the reference weight is determined based on the substrate weight and the coating weight corresponding to the electrode sheet. The coating weight may include, but is not limited to, coating weight on a surface A, coating weight of surfaces A and B, or the like. Herein, the surface A is a surface of the electrode sheet, and the surface B is another surface of the electrode sheet. During implementation, if coating is performed on the surface A, then the coating weight may be the coating weight of the surface A; or if coating is performed on the surface B after the coating of the surface A, then the coating weight may be the coating weight of surfaces A and B. In some implementations, the coating weight of the surface A or B corresponds to the electrode sheet. Different electrode sheets may have the same or different coating weight of the surface A or B.

In some implementations, a method of determining the reference weight may include, but is not limited to, a mean, a variance, or mean square deviation between the substrate weight and the coating weight corresponding to the electrode sheet, weighting, logarithm taking, and exponentiation of the mean, the variance, or the mean square deviation, and the like. For example, the mean between the substrate weight and the coating weight corresponding to the electrode sheet is taken as the reference weight corresponding to the electrode sheet.

In some implementations, step S12 includes steps S121 to S123:
Step S121: Determine the reference weight corresponding to the electrode sheet based on substrate weight and coating weight that correspond to the electrode sheet.

Herein, the coating weight may include, but is not limited to, the coating weight of the surface A, the coating weight of surfaces A and B, or the like. During implementation, different electrode sheets correspond to the same or different substrate weight and coating weight.

The method of determining the reference weight may include, but is not limited to, the mean, the variance, or the mean square deviation between the substrate weight and the coating weight corresponding to the electrode sheet, the weighting, logarithm taking, and exponentiation of the mean, the variance, or the mean square deviation, and the like.

In some implementations, step S121 includes steps S1211 and S1212:
Step S1211: Determine a sum of the substrate weight and the coating weight.

The coating weight includes one of the following: weight of a single-sided coating and weight of double-sided coatings. The weight of the single-sided coating may refer to the coating weight of the surface A. The weight of the double-sided coatings may refer to the coating weight of surfaces A and B. In some implementations, the coating weight is preset. For example, when the surface A of the electrode sheet is coated, coating weight is the coating weight of the surface A; and when the surface B of the electrode sheet is also coated, coating weight is the coating weight of surfaces A and B.

Step S1212: Determine, based on the sum, the reference weight corresponding to the electrode sheet.

For example, assuming that a mean of sums is used as the reference weight corresponding to the electrode sheet, in some implementations, the reference weight *RW* corresponding to the electrode sheet may be determined through the following formula (1-1): $RW = \frac{{W}_{s} + {W}_{c}}{2}$ (1-1); where *Wₛ* is the substrate weight, and *W_{c}* is the coating weight.

In this way, the reference weight is determined in real time through the sum between the substrate weight and the weight of single-sided/double-sided coatings, which improves accuracy of the reference weight compared with constant reference weight.

Step S122: Update the coating weight data based on the reference weight corresponding to the electrode sheet to obtain updated coating weight data.

Herein, the coating weight data includes weight corresponding to at least one detection position in the electrode sheet. During implementation, the number of detection positions is adapted to a width of the electrode sheet. For example, if the width of the electrode sheet is 1000 millimeters (Millimeter, mm), the number of detection positions may also be 1000, that is, the coating weight data includes weight corresponding to 1000 detection positions.

A method of updating the coating weight data may include, but is not limited to, replacement or keeping unchanged. For example, weight corresponding to a certain detection position is compared with the reference weight, and if the weight corresponding to the detection position is less than the reference weight, the weight corresponding to the detection position is updated to a preset weight; or if the weight corresponding to the detection position is not less than the reference weight, the weight corresponding to the detection position is kept unchanged. The preset weight may be any suitable weight, for example, 0 or 0.5 micrograms (microgram, µg).

In some implementations, the updated coating weight data includes a target weight corresponding to each detection position. Step S122 includes step S1221:
Step S1221: For weight corresponding to each detection position in the electrode sheet, determine, based on the weight corresponding to the detection position and the reference weight corresponding to the electrode sheet, target weight corresponding to the detection position.

Herein, the target weight may be the weight corresponding to the detection position, a preset weight, or the like. The preset weight may be any suitable weight, for example, 0 or 0.5 µg. During implementation, the weight corresponding to the detection position is compared with the reference weight to determine the target weight corresponding to the detection position.

In some implementations, step S1221 of determining, based on the weight corresponding to the detection position and the reference weight corresponding to the electrode sheet, the target weight corresponding to the detection position includes step S141 and/or step S142:
Step S141: When the weight corresponding to the detection position is less than the reference weight corresponding to the electrode sheet, use preset weight as the target weight corresponding to the detection position.

Herein, if the weight corresponding to the detection position is less than the reference weight, it indicates that the detection position may belong to the blank region, and then the preset weight is used as the target weight corresponding to the detection position. The preset weight may be any suitable weight, for example, 0.

Step S142: When the weight corresponding to the detection position is not less than the reference weight corresponding to the electrode sheet, take the weight corresponding to the detection position as the target weight corresponding to the detection position.

Herein, if the weight corresponding to the detection position is not less than the reference weight, it indicates that the detection position may belong to the coating region, and then the weight corresponding to the detection position is used as the target weight corresponding to the detection position.

In this way, the reference weight is compared with the weight corresponding to the detection position to use the preset weight or the weight corresponding to the detection position as the target weight, which improves the accuracy of the target weight, thereby improving accuracy of edge tracing of the coating region. Herein, edge tracing refers to obtaining of an edge of the coating region.

Step S123: Determine a coating region from the electrode sheet based on the updated coating weight data.

Herein, the updated coating weight data is traversed sequentially. When certain weight changes from the preset weight to non-preset weight, a detection position corresponding to the non-preset weight is a left edge of the coating region; or when certain weight changes from the non-preset weight to the preset weight, a detection position corresponding to the non-preset weight is a right edge of the coating region. In this case, a region bounded by the left edge and the right edge is used as the coating region.

For example, the updated coating weight data includes: {A0, A1, A2, ..., A97, A98, A99}. Traversing is performed starting from A0. If A0 to A2 are all preset weight and A3 is the non-preset weight, the detection position corresponding to A3 is the left edge of the coating region; and if A4 to A97 are all non-preset weight and A98 is the preset weight, the detection position corresponding to A97 is the right edge of the coating region.

In some implementations, because installation of the acquisition apparatus may be limited by on-site installation space, a scanning starting position of the acquisition apparatus may be opposite to an actual coating direction of the coating device. In this case, reverse processing needs to be performed on the updated coating weight data, that is, the updated coating weight data is traversed in reverse. When certain weight changes from the preset weight to the non-preset weight, the detection position corresponding to the non-preset weight is the left edge of the coating region; or when certain weight changes from non-preset weight to preset weight, the detection position corresponding to the non-preset weight is the right edge of the coating region. In this way, the region bounded by the left edge and the right edge is used as the coating region.

For example, the updated coating weight data includes: {A0, A1, A2, ..., A97, A98, A99}. Traversing is performed starting from A99. If A98 to A99 are all preset weight and A97 is non-preset weight, a detection position corresponding to A97 is the left edge of the coating region; and if A4 to A97 are all non-preset weight and A3 is preset weight, a detection position corresponding to A4 is the right edge of the coating region.

In this implementation of this disclosure, on the one hand, the reference weight is determined through the substrate weight and the coating weight corresponding to the electrode sheet, which improves determination accuracy of the reference weight; on the other hand, edge tracing of the coating region is performed in the coating weight data through the reference weight, which improves determination accuracy of the coating region and further helps determine the non-thinned region.

Step S13: Determine a non-thinned region from the coating region based on attribute information of the electrode sheet.

Herein, the attribute information of the electrode sheet may include, but is not limited to, at least one of attribute information of the thinned region and attribute information of a light spot region. The attribute information of the thinned region may include, but is not limited to, a width and a length. The attribute information of the light spot region may include, but is not limited to, a radius and a diameter of the light spot region. For example, the attribute information of the electrode sheet includes the width of the thinned region and/or the radius of the light spot region. During implementation, the width of the thinned region and the radius of the light spot region may be preset, and the width of the thinned region or the radius of the light spot region may have any suitable value, for example, 0 or 5 mm.

The non-thinned region is not larger than the coating region. For example, if both the width of the thinned region and the radius of the light spot region are 0, the coating region is the non-thinned region; or if the width of the thinned region is not 0 and/or the radius of the light spot region is not 0, the non-thinned region is smaller than the coating region.

In some implementations, step S13 includes one of steps S131 to S133:
Step S131: When the attribute information of the electrode sheet includes the attribute information of the thinned region and the attribute information of the light spot region, use, as the non-thinned region, a region formed after boundary lines on two sides of the coating region are respectively translated toward a center by a first length, where the first length includes a width of the thinned region and a radius of the light spot region.

Herein, the attribute information of the thinned region may include the width of the thinned region, and the width of the thinned region may have any suitable value, for example, 0 or 5 mm. The attribute information of the light spot region may include the radius of the light spot region, and the radius of the light spot region may have any suitable value, for example, 0 mm, 8 mm, or 10 mm. During implementation, the width of the thinned region and the radius of the light spot region may be preset.

The non-thinned region is not larger than the coating region. For example, if both the width of the thinned region and the radius of the light spot region are 0, the first length is 0, and in this case, the coating region is the non-thinned region; or if the width of the thinned region is not 0 and/or the radius of the light spot region is not 0, the first length is greater than 0, and in this case, the non-thinned region is smaller than the coating region. For example, if both the width of the thinned region and the radius of the light spot region are 5 mm and the width of the coating region is 200 mm, the width of the non-thinned region is 180 mm (200-5**2**2).

Step S132: When the attribute information of the electrode sheet includes the attribute information of the thinned region, use, as the non-thinned region, a region formed after boundary lines on two sides of the coating region are respectively translated toward a center by a second length, where the second length includes a width of the thinned region.

Herein, the attribute information of the thinned region may include the width of the thinned region. The second length may be greater than or equal to 0. During implementation, if the attribute information of the electrode sheet only includes the attribute information of the thinned region, the second length is the width of the thinned region.

The non-thinned region is not larger than the coating region. For example, if the width of the thinned region is 0, the second length is 0, and in this case, the coating region is the non-thinned region; or if the width of the thinned region is not 0, the second length is greater than 0, and in this case, the non-thinned region is smaller than the coating region. For example, if the width of the thinned region is 10 mm and the width of the coating region is 300 mm, the width of the non-thinned region is 280 mm (300-10*2).

Step S133: When the attribute information of the electrode sheet includes the attribute information of the light spot region, use, as the non-thinned region, a region formed after boundary lines on two sides of the coating region are respectively translated toward a center by a third length, where the third length includes a radius of the light spot region.

Herein, the attribute information of the light spot region may include the radius of the light spot region. The third length may be greater than or equal to 0. During implementation, if the attribute information of the electrode sheet only includes the attribute information of the light spot region, the third length is the radius of the light spot region.

The non-thinned region is not larger than the coating region. For example, if the radius of the light spot region is 0, the third length is 0, and in this case, the coating region is the non-thinned region; or if the radius of the light spot region is not 0, the third length is greater than 0, and the non-thinned region is smaller than the coating region. For example, if the radius of the light spot region is 8 mm and the width of the coating region is 200 mm, the width of the non-thinned region is 184 mm (200-8*2).

In this way, the non-thinned region is determined from the coating region based on preset sizes of the thinned region and/or the light spot region, which improves the accuracy of the non-thinned region.

In this embodiment of this disclosure, the coating weight data corresponding to the electrode sheet is acquired; where the electrode sheet includes the coating region and the blank region, and the coating region is coated with the active material coating; the coating region is determined from the electrode sheet based on the coating weight data and the reference weight corresponding to the electrode sheet, where the coating region includes the non-thinned region and the thinned region, and the coating thickness of the thinned region is less than the coating thickness of the non-thinned region; and the non-thinned region is determined from the coating region based on the attribute information of the electrode sheet. In this way, an effective non-thinned region is determined through the coating weight data corresponding to the electrode sheet, the reference weight corresponding to the electrode sheet, and the attribute information of the electrode sheet. Compared with edge tracing of the non-thinned region through the extreme value offset algorithm, the accuracy of the non-thinned region is improved.

In some implementations, the method further includes steps S151 and S152:
Step S151: Divide the non-thinned region into at least one coating sub-region.

Herein, the number of coating sub-regions may be at least one, for example, 2 or 4. The division method may be any suitable method, for example, uniform division or random division. In some implementations, the width of the same electrode sheet may be the sum of widths of multiple electrode sheets. During implementation, cutting may be performed along the width direction of the non-thinned region to form multiple electrode sheets. In some implementations, the non-thinned region is divided into multiple coating sub-regions. Coating quality of different sub-regions is evaluated, to quickly locate sub-regions with abnormal quality, thereby adjusting flowing of a slurry corresponding to the sub-region, that is, adjusting the thickness of the coating in the sub-region, so that the coating quality of the sub-region meets a standard.

Step S152: For each coating sub-region, determine, based on coating weight data corresponding to the coating sub-region, partition information corresponding to the coating sub-region.

Herein, the partition information may be any suitable information, for example, mean weight and a weight threshold. The weight threshold may include maximum weight, minimum weight, or the like. For example, a mean of the weight corresponding to various detection positions included in the coating sub-region may be used as the partition information. For another example, the maximum weight and the minimum weight in the weight corresponding to various detection positions included in the coating sub-region is used as the partition information.

In this implementation of this disclosure, on the one hand, the non-thinned region is divided into multiple coating sub-regions, so that coating weight data of each sub-region matches an actual size and position of the partition, which can truly reflect the contained coating weight data with respect to each actual partition; on the other hand, partition information corresponding to each sub-region is determined based on the coating weight data corresponding to each coating sub-region, which improves the accuracy of the partition information.

In some implementations, the method further includes steps S161 to S162:
Step S161: Display a first interface; where the first interface includes a display region.

Herein, the first interface is an interactive interface for performing a configuration operation and displaying information with respect to the electrode sheet. The first interface may include, but is not limited to, a region in which the configuration operation can be performed, and an operation control. The region in which the configuration operation can be performed may include, but is not limited to, at least one of a region for configuring the electrode sheet and a region for fitting the coating sub-regions. During implementation, persons skilled in the art may determine, based on an actual condition, the number of regions in which the configuration operation can be performed in the first interface and a specific layout of each region in which the configuration operation can be performed in the first interface. This is not limited in this embodiment of this disclosure.

The operation control may be any suitable operable control, for example, a first setting control, a second setting control, and a display control. The first setting control is mainly configured to set the attribute information of the electrode sheet. The display control is configured to display the partition information corresponding to each coating sub-region. The second setting control is mainly configured to set the substrate weight corresponding to the electrode sheet, the coating weight, and the like. During implementation, persons skilled in the art may determine the number of operation controls and a position of each operation control in the first interface based on an actual condition. This is not limited in this embodiment of this disclosure.

The first interface may be displayed on any suitable computer device with an interface interaction function. For example, the first interface may be displayed on a notebook computer, a mobile phone, a tablet computer, a palmtop computer, a personal digital assistant, a digital television, a desktop computer, or the like. During implementation, the computer device that displays the first interface and the computer device that executes the coating method may be the same or different, and this is not limited herein. For example, the computer device that executes the coating method may be the coating device, and the computer device that displays the first interface may be the notebook computer. The first interface may be an interactive interface of a client running on the notebook computer, or a web page displayed in a browser running on the notebook computer. For another example, both the computer device that executes the coating method and the computer device that displays the first interface are coating devices.

Step S162: In response to received partition information corresponding to each coating sub-region in the non-thinned region of the electrode sheet, display, in the display region, the partition information corresponding to each coating sub-region in the non-thinned region of the electrode sheet.

Herein, the partition information corresponding to the coating sub-region may include, but is not limited to, mean weight and a weight threshold. During implementation, after the partition information corresponding to each coating sub-region in the current non-thinned region is received, the partition information is directly transmitted to the display region for display. A display manner may include, but is not limited to, a figure and a list.

FIG. 2 is a first schematic diagram of a first interface according to an embodiment of this disclosure. As shown in FIG. 2, the first interface 20 includes a display region 21 and a first setting control 22. The display region 21 is used to display the partition information corresponding to each coating sub-region. The first setting control 22 is mainly configured to set the attribute information of the electrode sheet.

In some implementations, the first interface may also be used for creating a new electrode sheet, performing quality assessment on the electrode sheet, monitoring the coating weight data, and the like. In some implementations, the first interface is only accessible or usable to some staff (for example, management personnel or developers). For example, after successfully logging in via an account and a password, the management personnel can manage various electrode sheets, for example, creating a new electrode sheet, editing, deleting, and saving the existing electrode sheet, and performing other operations.

In this implementation of this disclosure, the partition information corresponding to each coating sub-region is displayed in real time in the first interface, which reflects a coating status of each sub-region more intuitively, thereby rapidly and effectively determining whether there is a sub-region with abnormal coating quality.

In some implementations, the display region includes a first display sub-region and a second display sub-region; and step S162 of displaying, in the display region, the partition information corresponding to each coating sub-region in the non-thinned region of the electrode sheet includes steps S1621 and S1622:
Step S1621: Display, in the first display sub-region in a first display manner, the partition information corresponding to each coating sub-region in the non-thinned region of the electrode sheet.

Herein, the first display manner may be any suitable manner, for example, a bar chart and a line chart. In some implementations, if double-sided coating is performed on the substrate, the first display sub-region may display at least one piece of partition information corresponding to each coating sub-region in the non-thinned region on the surface A and partition information corresponding to each coating sub-region in the non-thinned region on the surface B. In some implementations, partition information corresponding to an abnormal coating sub-region may also be highlighted. For example, if the mean weight (corresponding to the partition information) of the coating sub-region falls out of its offset range, mean weight of the coating sub-region may be highlighted. Highlighting may include, but is not limited to, highlighting and changing color.

Step S1622: Display, in the second display sub-region in a second display manner, partition information corresponding to each coating sub-region in at least one historical non-thinned region of the electrode sheet.

Herein, the second display manner may be any suitable manner, for example, a list. During implementation, the second display sub-region includes partition information corresponding to each coating sub-region in multiple historical non-thinned regions. The multiple historical non-thinned regions may include the current non-thinned region and at least one non-thinned region before the current non-thinned region. In some implementations, if double-sided coating is performed on the substrate, the second display sub-region may display at least one piece of partition information corresponding to each coating sub-region in a historical non-thinned region on the surface A, partition information corresponding to each coating sub-region in a historical non-thinned region on the surface B, and the like.

In some implementations, partition information corresponding to an abnormal coating sub-region may also be highlighted. For example, if the mean weight (corresponding to the partition information) of the coating sub-region falls out of its offset range, mean weight of the coating sub-region may be highlighted. Highlighting may include, but is not limited to, highlighting, color changing, and bolding.

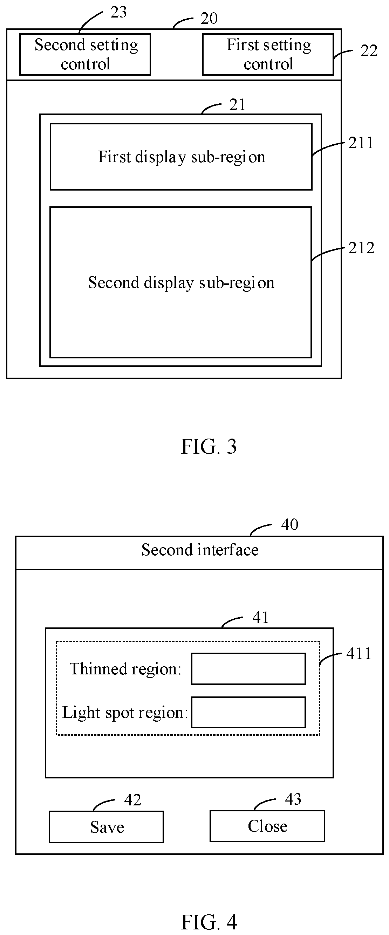

FIG. 3 is a second schematic diagram of a first interface according to an embodiment of this disclosure. As shown in FIG. 3, the first interface 20 includes a display region 21, a first setting control 22, and a second setting control 23. The display region 21 includes a first display sub-region 211 and a second display sub-region 212. The first display sub-region 211 is used to display the partition information corresponding to each coating sub-region in the current non-thinned region, and the second display sub-region 212 is used to display the partition information corresponding to each coating sub-region in the multiple historical non-thinned regions. The first setting control 22 is mainly configured to set the attribute information of the electrode sheet. The second setting control 23 is mainly configured to set the substrate weight corresponding to the electrode sheet, the coating weight, and the like.

In this way, the partition information corresponding to each sub-region in the current non-thinned region and the partition information corresponding to each sub-region in the multiple historical non-thinned regions is displayed separately in different display manners, which more intuitively reflects a coating status corresponding to each coating sub-region during each coating procedure, thereby rapidly and effectively determining whether there is a sub-region with abnormal coating quality during the current coating procedure, whether the same coating sub-region is abnormal during each coating procedure, and the like.

In some implementations, the first interface further includes a first setting control, and the method further includes step S171:
Step S171: In response to a trigger operation on the first setting control, display a second interface, where the second interface includes an attribute setting control, the attribute setting control is configured to set the attribute information of the electrode sheet, and the attribute information of the electrode sheet includes at least one of the following: the attribute information of the thinned region and the attribute information of the light spot region.

Herein, the trigger operation on the first setting control may be any suitable trigger operation, for example, a gesture, voice, or clicking of the first setting control.

The second interface is mainly an interactive interface for setting and displaying the attribute information of the electrode sheet. The second interface may include, but is not limited to, a region in which the configuration operation can be performed, and an operation control. The region in which the configuration operation can be performed is used to query or edit the existing electrode sheet. During implementation, persons skilled in the art may determine, based on an actual condition, the number of regions in which the configuration operation can be performed in the second interface and a specific layout of each region in which the configuration operation can be performed in the second interface. This is not limited in this embodiment of this disclosure.

The operation control may be any suitable operable control, for example, a save control, a close control, a browse control, and an edit control. During implementation, persons skilled in the art may determine the number of operation controls and a position of each operation control in the second interface based on an actual condition. This is not limited in this embodiment of this disclosure.

The second interface may be located in the first interface or may be independent of the first interface (for example, a pop-up window or a new window).

FIG. 4 is a schematic diagram of a second interface according to an embodiment of this disclosure. As shown in FIG. 4, the second interface 40 includes a first configuration region 41, a first save control 42, and a close control 43. The first configuration region 41 includes an attribute setting control 411. The attribute setting control 411 is mainly configured to set the attribute information of the electrode sheet, for example, the attribute information of the thinned region and the attribute information of the light spot region.

In some implementations, the second interface may also be used to configure basic information of the machine, a data storage path, an identifier length of the electrode sheet, the number of partitions, a partition retention setting, the number of historical non-thinned regions displayed in the second display sub-region, shutdown filtering, reverse data processing, and the like.

The basic information of the machine may include, but is not limited to, a device number, a machine number, and a process (cathode/anode). The data storage path may include, but is not limited to, a storage path for the coating weight data corresponding to each coating region, the coating weight data corresponding to the non-thinned region, or the partition information/coating quality corresponding to each coating sub-region. The identifier length of the electrode sheet may refer to a length of a film roll number, and the length may be any suitable length, for example, 8 or 18. The number of partitions is used to set the number of coating sub-regions into which the non-thinned region is divided. The partition retention setting is used to configure whether to retain data of the tail partition. The size of the tail partition may be smaller than that of another partition. If the data of the tail partition is retained, the coating quality of the tail partition also needs to be evaluated. Shutdown filtering is used to set whether to acquire the coating weight data. During implementation, if coating is not performed, that is, a coating speed is 0, the acquired coating weight data is meaningless. Reverse data processing is used to set whether it is necessary to perform reverse processing on the coating weight data corresponding to the non-thinned region.

In this implementation of this disclosure, the attribute information of the electrode sheet is set through a visualized interface, which simplifies an operation step and improves accuracy of the attribute information.

In some implementations, the first interface further includes a second setting control, and the method further includes step S181:
Step S181: In response to a trigger operation on the second setting control, display a third interface, where the third interface includes a substrate setting control and a coating weight setting control, the substrate setting control is configured to set substrate weight corresponding to the electrode sheet, and the coating weight setting control is configured to set coating weight corresponding to the electrode sheet.

Herein, the trigger operation on the second setting control may be any suitable trigger operation, for example, a gesture, voice, or clicking of the second setting control.

The third interface is mainly an interactive interface for setting and displaying information such as the substrate and coating weight of the electrode sheet. The third interface may include, but is not limited to, a region in which the configuration operation can be performed, and an operation control. The region in which the configuration operation can be performed is used for querying or editing the existing electrode sheets, creating a new electrode sheet, and the like. During implementation, persons skilled in the art may determine, based on an actual condition, the number of regions in which the configuration operation can be performed in the third interface and a specific layout of each region in which the configuration operation can be performed in the third interface. This is not limited in this embodiment of this disclosure.

The operation control may be any suitable operable control, for example, a save control, a cancel control, and an edit control. During implementation, persons skilled in the art may determine the number of operation controls and a position of each operation control in the third interface based on an actual condition. This is not limited in this embodiment of this disclosure.

The third interface may be located in the first interface or may be independent of the first interface (for example, a pop-up window or a new window).

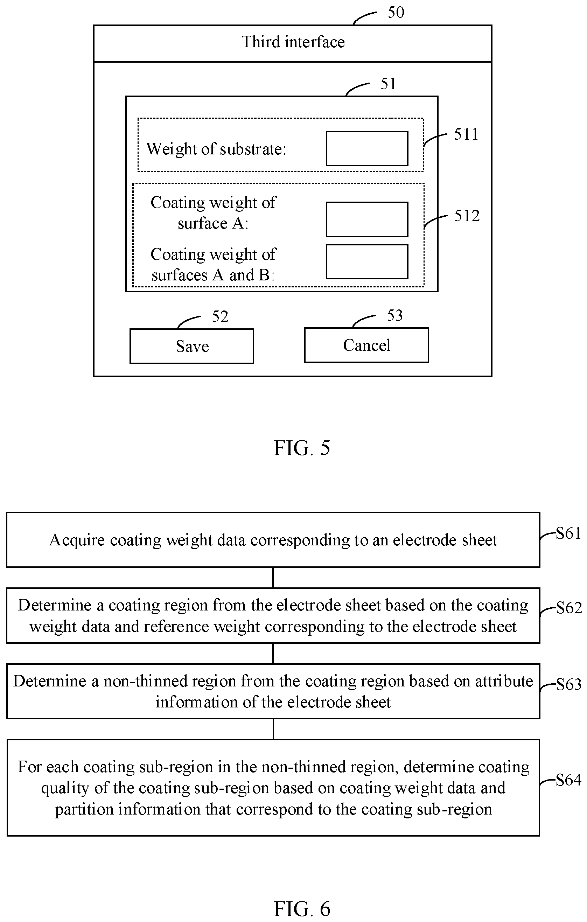

FIG. 5 is a schematic diagram of a third interface according to an embodiment of this disclosure. As shown in FIG. 5, the third interface 50 includes a second configuration region 51, a second save control 52, and a cancel control 53. The second configuration region 51 includes a substrate setting control 511 and a coating weight setting control 512.

In some implementations, the third interface may also be used for a name, a type, a substrate width, a length, widths of multiple film regions, and the like of the electrode sheet. The type may include a double-sided type, a single-sided type, and the like. The widths of the multiple film regions are used to set whether each film region has the same width.

In this implementation of this disclosure, the substrate weight and the coating weight corresponding to the electrode sheet are set through a visualized interface, which simplifies the operation step and improves the accuracy of the information.

FIG. 6 is a second schematic diagram of an implementation flow of a coating method according to an embodiment of this disclosure. As shown in FIG. 6, the method includes steps S61 to S64:
Step S61: Acquire coating weight data corresponding to an electrode sheet.

Step S62: Determine a coating region from the electrode sheet based on the coating weight data and reference weight corresponding to the electrode sheet.

Step S63: Determine a non-thinned region from the coating region based on attribute information of the electrode sheet.

Herein, the foregoing steps S61 to S63 correspond to the foregoing steps S11 to S13 respectively. During implementation, reference may be made to the specific implementations of the foregoing steps S11 to S13.

Step S64: For each coating sub-region in the non-thinned region, determine coating quality of the coating sub-region based on coating weight data and partition information that correspond to the coating sub-region.

Herein, the non-thinned region may be divided into any number of coating sub-regions, for example, 2 or 4 coating sub-regions. The division method may be any suitable method, for example, uniform division and random division. For example, the non-thinned region is uniformly divided into 4 coating sub-regions. In this way, each coating sub-region has the same width, and detection positions included in each coating sub-region also correspond to the same number of weight values. For example, if the width of the non-thinned region is 200 mm and the number of weight values corresponding to the included detection positions is 200, the non-thinned region is uniformly divided into 4 coating sub-regions, and each coating sub-region has a width of 50 mm and contains 50 weight values. That is, the 0^{th} to 49^{th} weight values of the non-thinned region are used as the coating weight data corresponding to the first coating sub-region, the 50^{th} to 99^{th} weight values of the non-thinned region are used as the coating weight data corresponding to the second coating sub-region, the 100^{th} to 149^{th} weight values of the non-thinned region are used as the coating weight data corresponding to the third coating sub-region, and the 150^{th} to 199^{th} weight values of the non-thinned region are used as the coating weight data corresponding to the fourth coating sub-region.

The partition information corresponding to the coating sub-region may include mean weight. The mean weight refers to a mean of weight corresponding to various detection positions included in the coating sub-region. For example, if the coating sub-region includes 50 detection positions, a mean of weight corresponding to the 50 detection positions is used as the mean weight.

The coating quality may include, but is not limited to, presence of an abnormality and absence of an abnormality. The abnormality may refer to edge warping, thick edges, dark marks, scratches, and the like. In some implementations, the coating quality of the coating sub-region is determined by comparing each weight with a corresponding threshold, that is, if each weight falls within its corresponding threshold range, the coating quality of the coating sub-region is normal; or conversely, if at least one weight falls out of its corresponding threshold range, the coating quality of the coating sub-region is abnormal. The weight may include, but is not limited to, at least one of mean weight, first weight, and second weight. The first weight is determined based on the weight corresponding to various detection positions included in the coating sub-region and the mean weight. The second weight is determined based on a weight threshold, the mean weight, and the first weight.

In some implementations, the coating weight data corresponding to the coating sub-region includes weight corresponding to at least one detection position, and the partition information of the coating sub-region includes the mean weight. Step S64 of determining the coating quality of the coating sub-region based on the coating weight data and the partition information that correspond to the coating sub-region includes steps S641 to S643:

Step S641: Determine, based on weight corresponding to each detection position and the mean weight, first weight corresponding to the coating sub-region.

Herein, a method of determining the first weight may include, but is not limited to, a first ratio and weighting, logarithm taking, or exponentiation of the first ratio. The first ratio is determined based on a target difference and total weight. The total weight refers to a sum of weight corresponding to various detection positions included in the coating sub-region. The target difference may be a certain first difference, several first differences, all first differences, or the like. The first difference refers to a difference between the weight corresponding to a certain detection position and the mean weight. For example, all the first differences are used as a target difference, and a ratio between the sum of squares of various target differences and the total weight is used as the first ratio.

In some implementations, step S641 includes steps S6411 and S6412:
Step S6411: Respectively determine a first difference between the weight corresponding to each detection position and the mean weight.

Herein, the weight values corresponding to different detection positions may be different, and therefore, first differences may also be different.

Step S6412: Determine, based on each first difference and total weight corresponding to the coating sub-region, the first weight corresponding to the coating sub-region, where the total weight represents a sum of weight included in the coating weight data corresponding to the coating sub-region.

Herein, a method of determining the first weight may include, but is not limited to, a first ratio and weighting, logarithm taking, or exponentiation of the first ratio. The first ratio is determined based on various first differences and the total weight. For example, a ratio between the sum of squares of various first differences and the total weight is used as the first ratio.

In some implementations, the first ratio *R*1 may be determined through the following formula (1-2): $R 1 = \frac{{\sum }_{i = 0}^{N - 1} {\left({V}_{i}-{V}_{m}\right)}^{2}}{N - 1}$ (1-2); where *Vᵢ* is weight corresponding to an i^{th} detection position, *Vₘ* is the mean weight, and *N* is the total weight corresponding to the coating sub-region.

In some implementations, first weight *W*1 may be a square root of the foregoing first ratio, and the first weight *W*1 may be determined through the following formula (1-3): $W 1 = \sqrt{R 1}$ (1-3); where *R*1 is the first ratio.

In this way, the first weight is determined based on the difference between the weight corresponding to each detection position and the mean weight and the total weight corresponding to the sub-region, which improves the accuracy of the first weight, thereby improving the accuracy of the coating quality of the sub-region.

Step S642: Determine, based on a weight threshold, the mean weight, and the first weight, second weight corresponding to the coating sub-region, where the weight threshold is determined based on the weight corresponding to each detection position.

Herein, the weight threshold may include, but is not limited to, at least one of maximum weight and minimum weight.

A method of determining the second weight may be a second ratio, a third ratio, weighting, logarithm taking, or exponentiation of the second or third ratio, a mean, variance, or mean square deviation between the second ratio and the third ratio, and weighting, logarithm taking, or exponentiation of the mean, the variance, or the mean square deviation, and the like.

The second ratio is determined based on the minimum weight, the mean weight, and the first weight. A method of determining the second ratio may include, but is not limited to, a ratio between a second difference and the first weight, and weighting, logarithm taking, or exponentiation of the ratio. The second difference refers to the difference between the mean weight and the minimum weight. For example, a weighted value of the ratio is used as the second ratio.

In some implementations, the second ratio *R*2 may be determined through the following formula (1-4): $R 2 = \frac{{V}_{m} - {V}_{min}}{3 W 1}$ (1-4); where *Vₘᵢₙ* is the minimum weight in the weight threshold, *Vₘ* is the mean weight, and *W*1 is the first weight.

The third ratio is determined based on the maximum weight, the mean weight, and the first weight. A method of determining the third ratio may include, but is not limited to, a ratio between the third difference and the first weight, and weighting, logarithm taking, or exponentiation of the ratio. The third difference refers to the difference between the mean weight and the maximum weight. For example, a weighted value of the ratio is used as the third ratio.

In some implementations, the third ratio *R*3 may be determined through the following formula (1-5): $R 3 = \frac{{V}_{max} - {V}_{m}}{3 W 1}$ (1-5); where *Vₘ* is the mean weight, *V*ₘₐₓ is the maximum weight in the weight threshold, and *W*1 is the first weight.

In some implementations, step S642 includes steps S6421 to S6423:
Step S6421: Determine a second difference between the mean weight and the minimum weight.

Herein, the difference between the mean weight and the minimum weight is used as the second difference.

Step S6422: Determine a third difference between the maximum weight and the mean weight.

Herein, the difference between the maximum weight and the mean weight is used as the third difference.

Step S6423: Determine, based on the second difference, the third difference, and the first weight, second weight corresponding to the coating sub-region.

A method of determining the second weight may be a second ratio, a third ratio, weighting, logarithm taking, or exponentiation of the second or third ratio, a mean, variance, or mean square deviation between the second ratio and the third ratio, weighting, logarithm taking, or exponentiation of the mean, variance, or mean square deviation, or the like. For example, a smaller value between the second ratio and the third ratio is used as the second weight.

In some implementations, the second weight *W*2 may be determined through the following formula (1-6): $W 2 = min \left\{R2,R3\right\}$ (1-6); where *R*2 is the second ratio and *R*3 is the third ratio.

In this way, the second weight is determined based on the maximum weight, the minimum weight, the mean weight, and the first weight, which improves the accuracy of the second weight, thereby improving the accuracy of the coating quality of the sub-region.

Step S643: Determine coating quality of the coating sub-region based on the first weight, the mean weight, and the second weight.

Herein, the coating quality may include, but is not limited to, the presence of an abnormality and the absence of an abnormality. During implementation, each weight may be compared with its corresponding threshold to determine the coating quality of the coating sub-region. Different weight values may correspond to different thresholds. For example, the threshold corresponding to the first weight may be a first threshold T1. If the first weight falls within the range [T1-S1, T1+S1], it indicates that the first weight is normal, where S1 is a first offset degree. The threshold corresponding to the mean weight may be a second threshold T2. If the mean weight falls within the range [T2-S2, T2+S2], it indicates that the mean weight is normal, where S2 is a second offset degree; and the threshold corresponding to the second weight may be a third threshold T3. If the second weight falls within the range [T3-S3, T3+S3], it indicates that the second weight is normal, where S3 is a third offset degree. S1 to S3 may be different.

In some implementations, step S643 includes steps S6431 to S6433:
Step S6431: Determine an offset value between the third weight and the corresponding threshold.

Herein, the third weight includes the first weight, the mean weight, and the second weight. Different third weight values correspond to different offset values. That is, the offset values include a first offset value between the first weight and a corresponding threshold, a second offset value between the mean weight and a corresponding threshold, and a third offset value between the second weight and a corresponding threshold.

Step S6432: When the offset value satisfies a preset condition, determine that the coating quality of the coating sub-region is normal.

Herein, the preset condition may be any suitable condition, for example, a condition whether the offset value falls within a corresponding offset range. During implementation, if each offset value falls within its corresponding offset range, it indicates that the coating quality of the coating sub-region is normal. That is, the first offset value falls within the corresponding offset range ([-S1, S1]), the second offset value falls within the corresponding offset range ([-S2, S2]), and the third offset value also falls within the corresponding offset range ([-S3, S3]).

Step S6433: When the offset value does not satisfy a preset condition, determine that the coating quality of the coating sub-region is abnormal.

Herein, if at least one offset value falls out of its corresponding offset range, it indicates that the coating quality of the coating sub-region is abnormal. For example, if the first offset value, the second offset value, and/or the third offset value falls out of the corresponding offset range, it is determined that the coating quality of the coating sub-region is abnormal. During implementation, the cause of the abnormal quality may be determined based on the coating speed, pressure, temperature, and the like of the coating device.

In this way, based on different weight of each sub-region and the corresponding threshold, it is determined whether the coating quality of the sub-region is abnormal. This can not only rapidly and effectively position a sub-region with abnormal quality, to improve production efficiency of coating, but also reduce a possibility of outflow of the electrode sheet with the abnormal coating.

In this embodiment of this disclosure, the coating quality of each coating sub-region is determined separately based on the coating weight data and the partition information corresponding to each coating sub-region, which improves the accuracy of the coating quality of each sub-region. This can not only rapidly and effectively determine whether there is the sub-region with abnormal quality, to improve the production efficiency of the coating, but also reduce the possibility of outflow of the electrode sheet with the abnormal coating. Therefore, in the subsequent production process of the electrode sheet, the coating quality on the surface of the electrode sheet is ensured, which further ensures a capacity, service life, and safety of the battery.

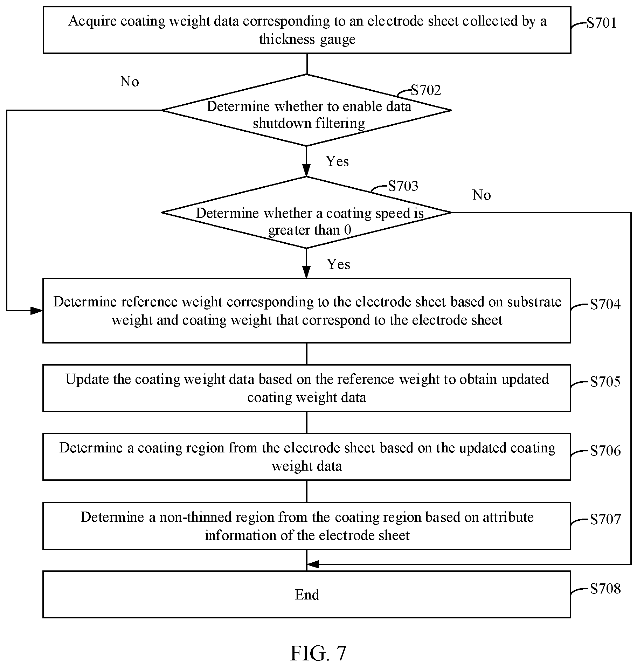

FIG. 7 is a third schematic diagram of an implementation flow of a coating method according to an embodiment of this disclosure. As shown in FIG. 7, the method includes steps S701 to S708:

Step S701: Acquire coating weight data corresponding to an electrode sheet collected by a thickness gauge (corresponding to the foregoing acquisition apparatus).

Herein, the coating weight data may be stored through a temporary weight variable or a weight variable. During implementation, if the electrode sheet does not have a film roll number, the coating weight data is stored in the temporary weight variable; otherwise, the coating weight data is stored in the weight variable. The film roll number refers to identifier information of the electrode sheet, and the identifier information may include, but is not limited to, a number and a name. In some implementations, to avoid memory overflow, the temporary weight variable needs to be cleared or destroyed regularly.

Step S702: Determine whether to enable data shutdown filtering; and if yes, proceed to step S703; otherwise, proceed to step S704.

Herein, the data shutdown filtering means that if the coating device is shut down, the data collected by the thickness gauge is filtered.

Step S703: Determine whether a coating speed is greater than 0; and if yes, proceed to step S704; otherwise, proceed to step S708.

Herein, if the coating speed is 0, it indicates that coating is not performed. In this case, no further processing of the coating weight data is required.

Step S704: Determine reference weight corresponding to the electrode sheet based on substrate weight and coating weight that correspond to the electrode sheet.

Herein, the reference weight may be a mean of the substrate weight and the coating weight. The coating weight includes the coating weight of a surface A and the coating weight of surfaces A and B. During implementation, when it is determined that there is a non-thinned region on the surface A, the coating weight corresponding to the electrode sheet is the coating weight of the surface A; or when it is determined that there is a non-thinned region on the surface B, the coating weight corresponding to the electrode sheet is the coating weight on the surfaces A and B. In some implementations, the determination of non-thinned regions on the surfaces A and B may be performed simultaneously.

Step S705: Update the coating weight data based on the reference weight to obtain updated coating weight data.

Herein, the weight corresponding to each detection position in the coating weight data is traversed. If the weight corresponding to the detection position is less than the reference weight, the weight corresponding to the detection position is set to preset weight; otherwise, the weight corresponding to the detection position is remained unchanged.

Step S706: Determine a coating region from the electrode sheet based on the updated coating weight data.

Herein, the updated coating weight data is traversed. If weight corresponding to a certain detection position is non-preset weight, the detection position is used as a left edge of the coating region; or if weight corresponding to a certain detection position becomes the preset weight, the detection position is used as a right edge of the coating region.

In some implementations, if a scanning starting position of the acquisition apparatus is opposite to an actual coating direction, reverse processing needs to be performed on the updated coating weight data to determine the coating region based on the reverse-processed coating weight data.

Step S707: Determine the non-thinned region from the coating region based on attribute information of the electrode sheet.

Herein, the attribute information of the electrode sheet may include, but is not limited to, attribute information of a light spot region and attribute information of the thinned region. The attribute information of the thinned region may include a width of the thinned region, and the like, and the attribute information of the light spot region may include a radius of the light spot region, and the like. The non-thinned region is determined from the coating region by using the attribute information. During implementation, the width of the non-thinned region is not greater than the width of the coating region. In some implementations, width of non-thinned region = width of coating region - 2 × radius of light spot region - 2 × width of thinned region.

Step S708: End.

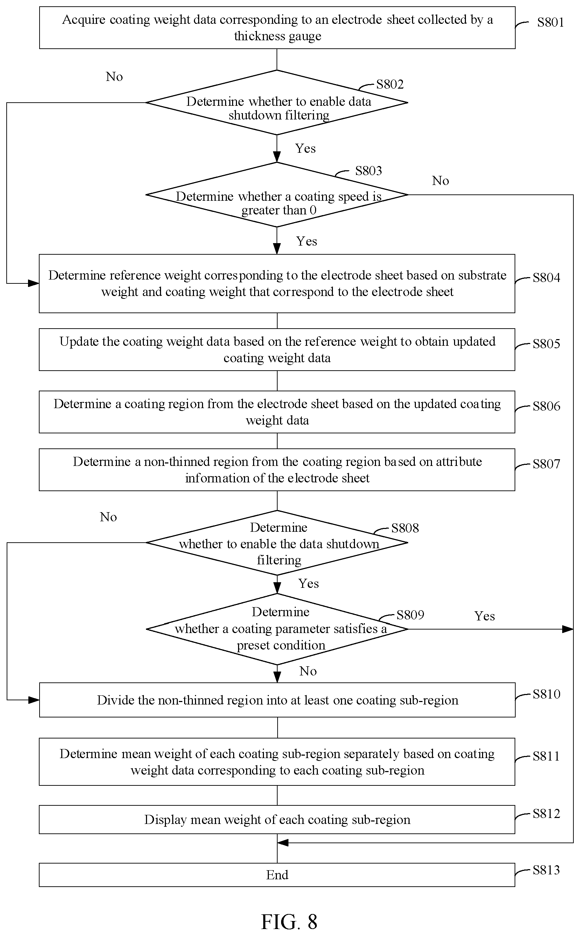

FIG. 8 is a fourth schematic diagram of an implementation flow of a coating method according to an embodiment of this disclosure. As shown in FIG. 8, the method includes steps S801 to S813:
Step S801: Acquire coating weight data corresponding to an electrode sheet collected by a thickness gauge (corresponding to the foregoing acquisition apparatus).

Step S802: Determine whether to enable data shutdown filtering; and if yes, proceed to step S803; otherwise, proceed to step S804.

Step S803: Determine whether a coating speed is greater than 0; and if yes, proceed to step S804; otherwise, proceed to step S813.

Step S804: Determine reference weight corresponding to the electrode sheet based on substrate weight and coating weight that correspond to the electrode sheet.

Step S805: Update the coating weight data based on the reference weight to obtain updated coating weight data.

Step S806: Determine a coating region from the electrode sheet based on the updated coating weight data.

Step S807: Determine the non-thinned region from the coating region based on attribute information of the electrode sheet.

Step S808: Determine whether to enable data shutdown filtering; and if yes, proceed to step S809; otherwise, proceed to step S810.

Herein, the coating weight data corresponding to the non-thinned region may be stored through a temporary partition variable or a partition variable. During implementation, if the electrode sheet does not have a film roll number, the coating weight data corresponding to the non-thinned region is stored in the temporary partition variable; otherwise, the coating weight data is stored in the partition variable. In some implementations, to avoid memory overflow, the temporary weight variable needs to be cleared or destroyed regularly.

Step S809: Determine whether a coating parameter satisfies a preset condition; and if yes, proceed to step S813; otherwise, proceed to step S810.

Herein, the coating parameter may include, but is not limited to, a coating speed or a state of a solenoid valve. The solenoid valve is an industrial device controlled via electromagnetism, is an automated basic component configured to control a fluid, and belongs to an actuator. The solenoid valve is used in an industrial control system to adjust a direction, a flow, a speed, and another parameter of a medium. During implementation, a working mode of a coating head of the coating device can be adjusted by adjusting a state of the solenoid valve. The working mode of the coating head may include, but is not limited to, an approach mode or a retract mode. The approach mode indicates that the coating head performs coating, and the retract mode indicates that the coating head stops coating. The preset condition may be that the coating speed is less than a preset speed and the solenoid valve is 0, that is, the working mode of the coating head is the retract mode. The preset speed may be any suitable speed, for example, 15 meters per minute.

Step S810: Divide the non-thinned region into at least one coating sub-region.

Step S811: Determine mean weight (corresponding to the foregoing partition information) of each coating sub-region separately based on coating weight data corresponding to each coating sub-region.

Herein, coating quality of each coating sub-region is determined based on the mean weight, a weight threshold, and weight corresponding to each contained detection position of each coating sub-region. During implementation, reference may be made to the specific implementation of the foregoing step S64. In some implementations, the mean weight, a current coating speed, pressure, temperature, and the like may be stored to facilitate subsequent analysis of a cause of abnormal coating quality of the coating sub-region.

Step S812: Display mean weight of each coating sub-region.

Herein, the mean weight of each coating sub-region may be displayed by using the first interface. During implementation, reference may be made to the specific implementations of the foregoing steps S161 to S162.

Step S813: End.

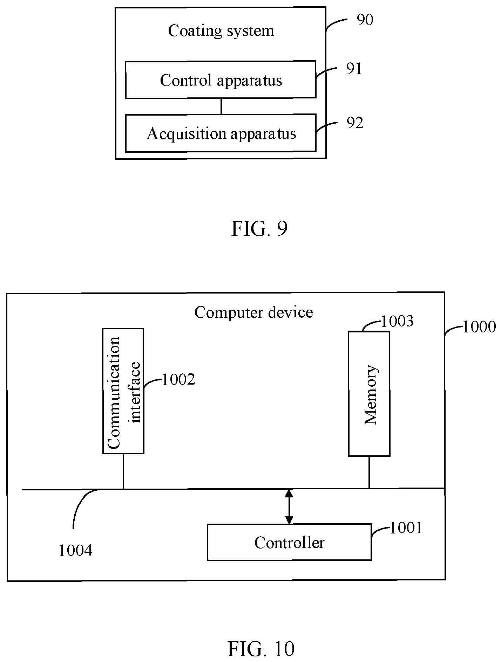

Based on the foregoing embodiments, an embodiment of this disclosure further provides a coating system. FIG. 9 is a schematic structural diagram of composition of a coating system according to an embodiment of this disclosure. As shown in FIG. 9, the coating system 90 includes a control apparatus 91 and an acquisition apparatus 92.

The acquisition apparatus 92 configured to acquire coating weight data corresponding to an electrode sheet, where the electrode sheet includes a coating region and a blank region, and the coating region is coated with an active material coating.

The control apparatus 91 is configured to: determine the coating region from the electrode sheet based on the coating weight data and reference weight corresponding to the electrode sheet, where the coating region includes a non-thinned region and a thinned region, and a coating thickness of the thinned region is less than a coating thickness of the non-thinned region; and determine the non-thinned region from the coating region based on attribute information of the electrode sheet.

Herein, the acquisition apparatus may be any suitable apparatus capable of acquiring coating data, for example, a thickness gauge, a weight detector, and an areal density meter. During implementation, the acquisition apparatus is in a communication connection with the control apparatus.

The control apparatus may be any suitable apparatus, for example, a PLC, an upper computer, or a combination of a PLC and an upper computer. For a method of determining the coating region, refer to the specific implementation of the foregoing step S12. For a method of determining the non-thinned region, refer to the specific implementation of the foregoing step S13.

In some implementations, the control apparatus 91 is further configured to: divide the non-thinned region into at least one coating sub-region; and for each coating sub-region in the non-thinned region, determine coating quality of the coating sub-region based on coating weight data and partition information that correspond to the coating sub-region.

Herein, the partition information may be any suitable information, for example, the mean weight and the weight threshold. During implementation, for the division of the non-thinned region and the partition information corresponding to the coating sub-region, refer to the specific implementations of the foregoing steps S151 and S152.

In some implementations, the coating system 90 further includes a display apparatus; the control apparatus 91 is further configured to: for each coating sub-region in the non-thinned region, determine partition information corresponding to the coating sub-region based on coating weight data corresponding to the coating sub-region; and the display apparatus is configured to display the partition information corresponding to each coating sub-region.

Herein, the display apparatus may be any suitable apparatus capable of implementing the display function, for example, an upper computer with a display screen. During implementation, the control apparatus 91 communicates with the display apparatus to transmit the partition information corresponding to each coating sub-region to the display apparatus for display. In some implementations, the display apparatus is configured to display a first interface, a second interface, a third interface, and the like. For the display of the first interface, refer to the specific implementation of the foregoing steps S161 and S162. For the display of the second interface, refer to the specific implementation of the foregoing step S171. For the display of the third interface, refer to the specific implementation of the foregoing step S181.

In this way, on the one hand, the partition information corresponding to each sub-region is determined based on the coating weight data corresponding to each coating sub-region, which improves the accuracy of the partition information; on the other hand, the partition information corresponding to each coating sub-region is displayed in real time, which reflects a coating state of each sub-region more intuitively, thereby rapidly and effectively determining whether there is a sub-region with abnormal coating quality.

In some implementations, the control apparatus 91 is further configured to: for each coating sub-region in the non-thinned region, determine coating quality of the coating sub-region based on coating weight data and partition information that correspond to the coating sub-region.

Herein, the non-thinned region may be divided into any number of coating sub-regions. The partition information corresponding to the coating sub-region may include the mean weight. The coating quality may include, but is not limited to, presence of an abnormality and absence of an abnormality. During implementation, for a method of determining the coating quality of the coating sub-region, refer to the specific implementation of the foregoing step S64.

In this embodiment of this disclosure, the effective non-thinned region is determined through the coating weight data corresponding to the electrode sheet acquired by the acquisition apparatus, the reference weight corresponding to the electrode sheet, and the attribute information of the electrode sheet, which improves the accuracy of the non-thinned region compared with edge tracing of the non-thinned region through the extreme value offset algorithm.

It should be noted that, in the embodiments of this disclosure, if the foregoing method is implemented in the form of a software function module and sold or used as an independent product, the software function module may also be stored in a computer-readable storage medium. Based on such understanding, the technical solutions in the embodiments of this disclosure essentially or the part that contributes to the related art may be embodied in a form of a software product. The software product is stored in a storage medium and includes several instructions to enable a computer device (which may be a personal computer, a server, a network device, or the like) to execute all or part of the method in each embodiment of this disclosure. The foregoing storage medium includes: a USB flash drive, a removable hard disk, a read-only memory (ROM), a magnetic disk, an optical disk, or another medium that can store program code. In this way, in the embodiments of this disclosure, any specific combination of hardware and software is unlimited.

An embodiment of this disclosure provides a computer device, including a memory and a processor. The memory stores a computer program that can be run on the processor. The processor implements the foregoing method when executing the computer program.

An embodiment of this disclosure provides a computer-readable storage medium, storing a computer program. The computer program implements the foregoing method when executed by a processor. The computer-readable storage medium may be transient or non-transient.

An embodiment of this disclosure provides a computer program product, including a computer program or an instruction. The computer program or the instruction implements some or all of the steps in the foregoing method when executed by a processor. The computer program product may be specifically implemented by hardware, software, or a combination thereof. In an optional embodiment, the computer program product is embodied as a computer storage medium. In another optional embodiment, the computer program product is embodied as a software product, for example, a Software Development Kit (Software Development Kit, SDK).

It should be noted that, FIG. 10 is a schematic diagram of a hardware entity of a computer device according to an embodiment of this disclosure. As shown in FIG. 10, the hardware entity of the computer device 1000 includes: a controller 1001, a communication interface 1002, and a memory 1003.

The controller 1001 generally controls an overall operation of the computer device 1000. During implementation, the controller 1001 may be any suitable controller, for example, a PLC.

The communication interface 1002 may help the computer device to communicate with another terminal or server through a network.

The memory 1003 is configured to store instructions and applications executable by the controller 1001, may also cache data (for example, image data, audio data, voice communication data, and video communication data) to be processed or already processed by the controller 1001 and various modules in the computer device 1000, and may be implemented by a flash memory (FLASH) or a random access memory (Random Access Memory, RAM). Data transmission may be performed between the controller 1001, the communication interface 1002, and the memory 1003 through a bus 1004.

It should be noted that the descriptions of the foregoing storage medium and device embodiments are similar to the descriptions of the foregoing method embodiments and have beneficial effects similar to those of the method embodiments. For technical details not disclosed in the storage medium and device embodiments of this disclosure, refer to the descriptions of the method embodiments of this disclosure for understanding.

It should be understood that "one embodiment" or "an embodiment" mentioned throughout this specification means that a specific feature, structure, or characteristic related to this embodiment is included in at least one embodiment of this disclosure. Therefore, "in one embodiment" or "in an embodiment" appearing in various places throughout this specification does not necessarily refer to the same embodiment. In addition, these specified features, structures, or characteristics may be combined in one or more embodiments in any appropriate manner. It should be understood that, in the embodiments of this disclosure, sequence numbers of the foregoing processes do not mean execution sequences. The execution sequences of the processes should be determined according to functions and internal logic of the processes, and should not be construed as any limitation on the implementation processes of the embodiments of this disclosure. The foregoing sequence numbers in the embodiments of this disclosure are only intended for description, and do not indicate advantages and disadvantages of the embodiments. It should be noted that the terms "include", "contain", or any of their variants herein are intended to cover a non-exclusive inclusion, such that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element.

In the several embodiments provided in this disclosure, it should be understood that the disclosed device and method may be implemented in other manners. The described device embodiment is merely an example. For example, the unit division is merely logical function division and may be other division in actual implementation. For example, multiple units or components may be combined or integrated into another system, or some features may be ignored or may not be performed. In addition, the displayed or discussed mutual couplings or direct couplings or communication connections of components may be implemented by using some interfaces. The indirect couplings or communication connections between the devices or units may be implemented in electrical, mechanical, or other forms.

The foregoing units described above as separate parts may or may not be physically separate, and parts displayed as units may or may not be physical units, may be located in one position, or may be distributed on multiple network elements. Some or all of the units may be selected based on an actual requirement, to achieve the objectives of the solutions in the embodiments. In addition, all functional units in the embodiments of this disclosure may be integrated into one processing unit, or each of the units may serve as one unit independently, or two or more units may be integrated into one unit. The foregoing integrated unit may be implemented in a form of hardware, or may be implemented in a form of a functional unit integrating hardware and software.

Persons of ordinary skills in the art may understand that all or some of the steps of the method embodiments may be implemented by relevant hardware under instruction of a program. The program may be stored in a computer-readable storage medium. When the program runs, the steps of the method embodiments are performed. The foregoing storage medium includes: any medium that can store program code, such as a mobile storage device, a read-only memory (ROM), a magnetic disk, or an optical disk. Alternatively, if the foregoing integrated unit in this disclosure is implemented in a form of a software function module and sold or used as an independent product, the integrated unit may also be stored in a computer-readable storage medium. Based on such understanding, the technical solutions in this disclosure essentially or the part that contributes to the related art may be embodied in a form of a software product. The computer software product is stored in a storage medium and includes several instructions to enable a computer device (which may be a personal computer, a server, a network device, or the like) to execute all or part of the method in each embodiment of this disclosure. The foregoing storage medium includes: any medium that can store program code, such as a mobile storage device, a ROM, a magnetic disk, or an optical disk.

The foregoing descriptions are only implementations of this disclosure, but are not intended to limit the protection scope of this disclosure. Any variation or replacement readily figured out by persons skilled in the art within the technical scope disclosed in this disclosure shall fall within the protection scope of this disclosure.

It should be stated that all specific embodiments of this disclosure can be manufactured or used industrially.

## Claims

1. A coating method, wherein the method comprises:
acquiring coating weight data corresponding to an electrode sheet, wherein the electrode sheet comprises a coating region and a blank region, and the coating region is coated with an active material coating;
determining the coating region from the electrode sheet based on the coating weight data and reference weight corresponding to the electrode sheet, wherein the coating region comprises a thinned region and a non-thinned region, and a coating thickness of the thinned region is less than a coating thickness of the non-thinned region; and
determining the non-thinned region from the coating region based on attribute information of the electrode sheet.

2. The method according to claim 1, wherein the determining the coating region from the electrode sheet based on the coating weight data and reference weight corresponding to the electrode sheet comprises:
determining the reference weight corresponding to the electrode sheet based on substrate weight and coating weight that correspond to the electrode sheet;
updating the coating weight data based on the reference weight corresponding to the electrode sheet to obtain updated coating weight data; and
determining the coating region from the electrode sheet based on the updated coating weight data.

3. The method according to claim 2, wherein the determining the reference weight corresponding to the electrode sheet based on substrate weight and coating weight that correspond to the electrode sheet comprises:
determining a sum of the substrate weight and the coating weight, wherein the coating weight comprises one of the following: weight of a single-sided coating and weight of double-sided coatings; and
determining, based on the sum, the reference weight corresponding to the electrode sheet.

4. The method according to claim 2 or 3, wherein the coating weight data comprises weight corresponding to at least one detection position in the electrode sheet, and the updated coating weight data comprises target weight corresponding to each detection position; and
the updating the coating weight data based on the reference weight corresponding to the electrode sheet to obtain updated coating weight data comprises:
for weight corresponding to each detection position in the electrode sheet, determining, based on the weight corresponding to the detection position and the reference weight corresponding to the electrode sheet, target weight corresponding to the detection position.

5. The method according to claim 4, wherein the determining, based on the weight corresponding to the detection position and the reference weight corresponding to the electrode sheet, target weight corresponding to the detection position comprises at least one of the following:
when the weight corresponding to the detection position is less than the reference weight corresponding to the electrode sheet, using preset weight as the target weight corresponding to the detection position; or
when the weight corresponding to the detection position is not less than the reference weight corresponding to the electrode sheet, using the weight corresponding to the detection position as the target weight corresponding to the detection position.

6. The method according to any one of claims 1 to 5, wherein the attribute information of the electrode sheet comprises at least one of the following: attribute information of a thinned region and attribute information of a light spot region; and
the determining the non-thinned region from the coating region based on attribute information of the electrode sheet comprises:
when the attribute information of the electrode sheet comprises the attribute information of the thinned region and the attribute information of the light spot region, using, as the non-thinned region, a region formed after boundary lines on two sides of the coating region are respectively translated toward a center by a first length, wherein the first length comprises a width of the thinned region and a radius of the light spot region;
when the attribute information of the electrode sheet comprises the attribute information of the thinned region, using, as the non-thinned region, a region formed after boundary lines on two sides of the coating region are respectively translated toward a center by a second length, wherein the second length comprises a width of the thinned region; or
when the attribute information of the electrode sheet comprises the attribute information of the light spot region, using, as the non-thinned region, a region formed after boundary lines on two sides of the coating region are respectively translated toward a center by a third length, wherein the third length comprises a radius of the light spot region.

7. The method according to any one of claims 1 to 6, wherein the method further comprises:
dividing the non-thinned region into at least one coating sub-region; and
for each coating sub-region, determining, based on coating weight data corresponding to the coating sub-region, partition information corresponding to the coating sub-region.

8. The method according to any one of claims 1 to 7, wherein the method further comprises:
for each coating sub-region in the non-thinned region, determining coating quality of the coating sub-region based on coating weight data and partition information that correspond to the coating sub-region.

9. The method according to claim 8, wherein the coating weight data corresponding to the coating sub-region comprises weight corresponding to at least one detection position, and the partition information of the coating sub-region comprises mean weight; and
the determining coating quality of the coating sub-region based on coating weight data and partition information that correspond to the coating sub-region comprises:
determining, based on weight corresponding to each detection position and the mean weight, first weight corresponding to the coating sub-region;
determining, based on a weight threshold, the mean weight, and the first weight, second weight corresponding to the coating sub-region, wherein the weight threshold is determined based on the weight corresponding to each detection position; and
determining the coating quality of the coating sub-region based on the first weight, the mean weight, and the second weight.

10. The method according to claim 9, wherein the determining, based on weight corresponding to each detection position and the mean weight, first weight corresponding to the coating sub-region comprises:
respectively determining a first difference between the weight corresponding to each detection position and the mean weight; and
determining, based on each first difference and total weight corresponding to the coating sub-region, the first weight corresponding to the coating sub-region, wherein the total weight represents a sum of weight comprised in the coating weight data corresponding to the coating sub-region.

11. The method according to claim 9 or 10, wherein the weight threshold comprises maximum weight and minimum weight; and
the determining, based on a weight threshold, the mean weight, and the first weight, second weight corresponding to the coating sub-region comprises:
determining a second difference between the mean weight and the minimum weight;
determining a third difference between the maximum weight and the mean weight; and
determining the second weight corresponding to the coating sub-region based on the second difference, the third difference, and the first weight.

12. The method according to any one of claims 9 to 11, wherein the determining the coating quality of the coating sub-region based on the first weight, the mean weight, and the second weight comprises:
determining an offset value between third weight and a corresponding threshold, wherein the third weight comprises the first weight, the mean weight, and the second weight; and
when the offset value satisfies a preset condition, determining the coating quality of the coating sub-region is normal; or
when the offset value does not satisfy a preset condition, determining that the coating quality of the coating sub-region is abnormal.

13. The method according to any one of claims 1 to 12, wherein the method further comprises:
displaying a first interface, wherein the first interface comprises a display region; and
in response to received partition information corresponding to each coating sub-region in the non-thinned region of the electrode sheet, displaying, in the display region, the partition information corresponding to each coating sub-region in the non-thinned region of the electrode sheet.

14. The method according to claim 13, wherein the display region comprises a first display sub-region and a second display sub-region; and
the displaying, in the display region, the partition information corresponding to each coating sub-region in the non-thinned region of the electrode sheet comprises:
displaying, in the first display sub-region in a first display manner, the partition information corresponding to each coating sub-region in the non-thinned region of the electrode sheet; and
displaying, in the second display sub-region in a second display manner, partition information corresponding to each coating sub-region in at least one historical non-thinned region of the electrode sheet.

15. The method according to claim 13 or 14, wherein the first interface further comprises a first setting control, and the method further comprises:
in response to a trigger operation on the first setting control, displaying a second interface, wherein the second interface comprises an attribute setting control, the attribute setting control is configured to set the attribute information of the electrode sheet, and the attribute information of the electrode sheet comprises at least one of the following: the attribute information of the thinned region and the attribute information of the light spot region.

16. The method according to any one of claims 13 to 15, wherein the first interface further comprises a second setting control, and the method further comprises:
in response to a trigger operation on the second setting control, displaying a third interface, wherein the third interface comprises a substrate setting control and a coating weight setting control, the substrate setting control is configured to set substrate weight corresponding to the electrode sheet, and the coating weight setting control is configured to set coating weight corresponding to the electrode sheet.

17. A coating system, comprising:
an acquisition apparatus, configured to acquire coating weight data corresponding to an electrode sheet, wherein the electrode sheet comprises a coating region and a blank region, and the coating region is coated with an active material coating; and
a control apparatus, configured to: determine the coating region from the electrode sheet based on the coating weight data and reference weight corresponding to the electrode sheet, wherein the coating region comprises a non-thinned region and a thinned region, and a coating thickness of the thinned region is less than a coating thickness of the non-thinned region; and determine the non-thinned region from the coating region based on attribute information of the electrode sheet.

18. The system according to claim 17, wherein the system further comprises a display apparatus, wherein:
the control apparatus is further configured to: for each coating sub-region in the non-thinned region, determine partition information corresponding to the coating sub-region based on coating weight data corresponding to the coating sub-region; and
the display apparatus is configured to display each piece of partition information.

19. A computer device, comprising a processor and a memory, wherein the memory stores a computer program that can be run on the processor, and when executing the computer program, the processor implements the following steps:
acquiring coating weight data corresponding to an electrode sheet, wherein the electrode sheet comprises a coating region and a blank region, and the coating region is coated with an active material coating;
determining the coating region from the electrode sheet based on the coating weight data and reference weight corresponding to the electrode sheet, wherein the coating region comprises a thinned region and a non-thinned region, and a coating thickness of the thinned region is less than a coating thickness of the non-thinned region; and
determining the non-thinned region from the coating region based on attribute information of the electrode sheet.

20. A computer-readable storage medium, wherein the computer-readable storage medium stores a computer program, and when executed by a processor, the computer program implements the following steps:
acquiring coating weight data corresponding to an electrode sheet, wherein the electrode sheet comprises a coating region and a blank region, and the coating region is coated with an active material coating;
determining the coating region from the electrode sheet based on the coating weight data and reference weight corresponding to the electrode sheet, wherein the coating region comprises a thinned region and a non-thinned region, and a coating thickness of the thinned region is less than a coating thickness of the non-thinned region; and
determining the non-thinned region from the coating region based on attribute information of the electrode sheet.
